# EUROPÄISCHE PATENTSCHRIFT

(11) **EP 2 436 106 B1**
(45) Veröffentlichungstag und Bekanntmachung des Hinweises auf die Patenterteilung: **19.07.2017**
(21) Anmeldenummer: 10720163.4
(22) Anmeldetag: 25.05.2010
(51) Int. Cl.: H02K 15/04

(54) **VERFAHREN ZUR HERSTELLUNG EINER STÄNDERWICKLUNG EINER ELEKTRISCHEN MASCHINE, INSBESONDERE EINES WECHSELSTROMGENERATORS**
METHOD FOR PRODUCING A STATOR WINDING OF AN ELECTRIC MACHINE, IN PARTICULAR AN ALTERNATOR
PROCÉDÉ DE FABRICATION D'UN ENROULEMENT STATORIQUE D'UNE MACHINE ÉLECTRIQUE, EN PARTICULIER D'UN GÉNÉRATEUR DE COURANT ALTERNATIF

(30) Priorität: 29.05.2009 DE 102009024231
(43) Veröffentlichungstag der Anmeldung: 04.04.2012
(73) Patentinhaber: Robert Bosch GmbH, 70442 Stuttgart (DE)
(72) Erfinder: PFLUEGER, Klaus, 71735 Eberdingen (DE); HENNE, Martin, 71696 Moeglingen (DE); HERBOLD, Klaus, 71679 Asperg (DE); SCHWARZKOPF, Christoph, 74399 Walheim (DE); KREUZER, Helmut, 71701 Schwieberdingen (DE)
(86) Internationale Anmeldenummer: PCT/EP2010/057144
(87) Internationale Veröffentlichungsnummer: WO 2010/136445

(56) Entgegenhaltungen:
- EP-A2- 1 494 337
- WO-A2-2008/081020
- DE-A1-102005 048 094
- US-A1- 2008 201 935

## Beschreibung

### Stand der Technik

Aus der Veröffentlichung WO 2008/081020 A2 ist ein Verfahren zur Herstellung einer Ständerwicklung einer elektrischen Maschine, ausgeführt als Wechselstromgenerator, offenbart. Durch das dort beschriebene Verfahren weist die dort dargestellte Wicklung verhältnismäßig viele Fügestellen auf.

Aus der US 2008/201935 A1 ist ein Verfahren zur Herstellung einer Ständerwicklung einer elektrischen Maschine offenbart. Im Rahmen dieses Verfahrens wird vorgeschlagen aus einem durchgängigen Drahtstück eine Phasenwicklung mit mehreren Spulen zu wickeln. Die mehreren Spulen werden in unterschiedliche Richtungen mit einer bestimmten Anzahl an Windungen gewickelt. Mehrere Spulenseiten gehen einstückig in Spulenverbinder über. Windungen einer Spule werden so zueinander verschoben, dass die in Spulenverbinder übergehenden Spulenseiten zuäußerst oder zuinnerst liegende Spulenseiten einer Spule sind. Des Weiteren ist die EP 1 494 337 A2 bekannt.

### Offenbarung der Erfindung

### Vorteile der Erfindung

Das erfindungsgemäße Verfahren zur Herstellung einer Vorstufe einer Phasenwicklung einer Ständerwicklung einer elektrischen Maschine mit den Merkmalen des Hauptanspruchs hat den Vorteil, dass die Ständerwicklung zumindest eine Phasenwicklung umfasst, die in verhältnismäßig einfacher Weise durchgängig aus einem Drahtstück herstellbar ist.

Der gemäß dem Hauptanspruch vorgesehene Verfahrensschritt kann dadurch effizient vorgenommen werden, indem die Spulenseiten einer Spule in zwei Gruppen geteilt werden, wobei die beiden Gruppen auseinandergeschoben werden. Die beiden Gruppen teilen sich dabei in Spulenseiten der einen Seite der Spule und in die Spulenseiten der anderen Seite der Spule ein. Dadurch ist erreichbar, dass die zuäußerst liegenden Spulenseiten diejenigen Spulenseiten sind, die die Verbindungen zu unmittelbar benachbarten Spulen dieses Drahtstücks ermöglichen.

Gemäß einer weiteren Ausgestaltung der Erfindung nach den Merkmalen der Unteransprüche 3 und 4ist es möglich, eine Zweischichtschleifenwicklung herzustellen, die einerseits aus einem durchgängigen Draht besteht und andererseits einen gleichmäßigen Wickelkopf aufweist.

Weitere Vorteile zu den Merkmalen der weiteren Unteransprüche ergeben sich aus der Beschreibung.

### Kurze Beschreibungen der Zeichnungen

Die Erfindung wird im Folgenden beispielhaft anhand der Figuren näher erläutert.

Es zeigen:
Figur 1 eine elektrische Maschine in einem Längsschnitt,
Figur 2a und 2b eine erste Vorrichtung zum Wickeln eines Drahtes und einen Schnitt durch den gewickelten Draht,
Figur 3a eine Spulenkette, nachdem man diese von der Vorrichtung aus Figur 2a abgenommen hat,
Figur 3b eine Einzelansicht einer Spule der Spulenkette aus Figur 3a,
Figur 4a zeigt einen Schnitt durch eine Spule aus Figur 3b und wie die Windungen der Spule zueinander verschoben werden,
Figur 4b und 4c zeigen die Lage der Windungen der Spule aus Figur 4a nach dem Verschieben,
Figur 4d eine Draufsicht auf die Spule nach dem Verschieben,
Figur 5a die Spule aus Figur 4a-4d mit zueinander verschobenen Windungen nach einem Prägevorgang,
Figur 5b einen Schnitt durch geprägte Spulenseiten der Windungen aus Figur 5a,
Figur 6 die Spulenkette aus Figur 3a mit verschobenen geprägten Windungen,
Figur 7a eine räumliche Ansicht einer Spule der Spulenkette aus Figur 6 nach der Verbindung durch einen flächigen Isolationsstoff,
Figur 7b einen Schnitt durch die Windungen der Spule aus Figur 7a,
Figur 8a eine räumliche Ansicht der Spule nach dem Auseinanderschieben der beiden Gruppen von Spulenseiten einer Spule,
Figur 8b einen Schnitt durch die Spulenseiten aus Figur 8a,
Figur 9 die Spulenkette aus Figur 6 nach dem Auseinanderschieben der beiden Gruppen von Spulenseiten einer Spule,
Figur 10 einen Schnitt durch die Spulenkette aus Figur 9,
Figur 11 die Spulenkette aus Figur 10 nach dem Verwinkeln der Spulenkette,
Figur 12 eine Schnittdarstellung mehrerer Spulenketten nach dem Verwinkeln und dem Aufeinander- und Übereinandersetzen der Phasenwicklungen entsprechenden Spulenketten,
Figur 13 mehrere, hier fünf, Spulenketten nach dem Vorgang des Aufeinanderklappens von Spulenseiten,
Figur 14 einen weiteren Schritt, in dem entstandene Untergruppen aufeinander geklappt werden,
Figur 15 eine Seitenansicht nach dem in Figur 14 angedeuteten und durchgeführten Vorgang,
Figur 16 in schematischer Weise zwei benachbarte Untergruppen nach dem Umschlagen,
Figur 17 beispielhaft eine Phasenwicklung in einem quaderförmigen Ständerkern,
Figur 18 eine Verschaltung von fünf Phasenwicklungen.

### Ausführungsformen der Erfindung

### Beschreibung

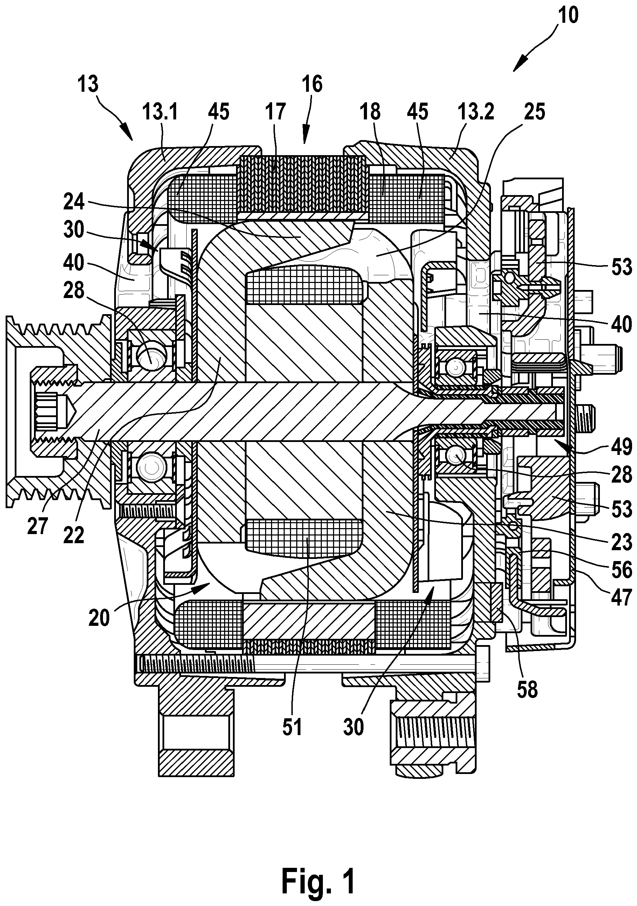

In Figur 1 ist ein Längsschnitt durch eine elektrische Maschine 10, hier in der Ausführung als Generator bzw. Wechselstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

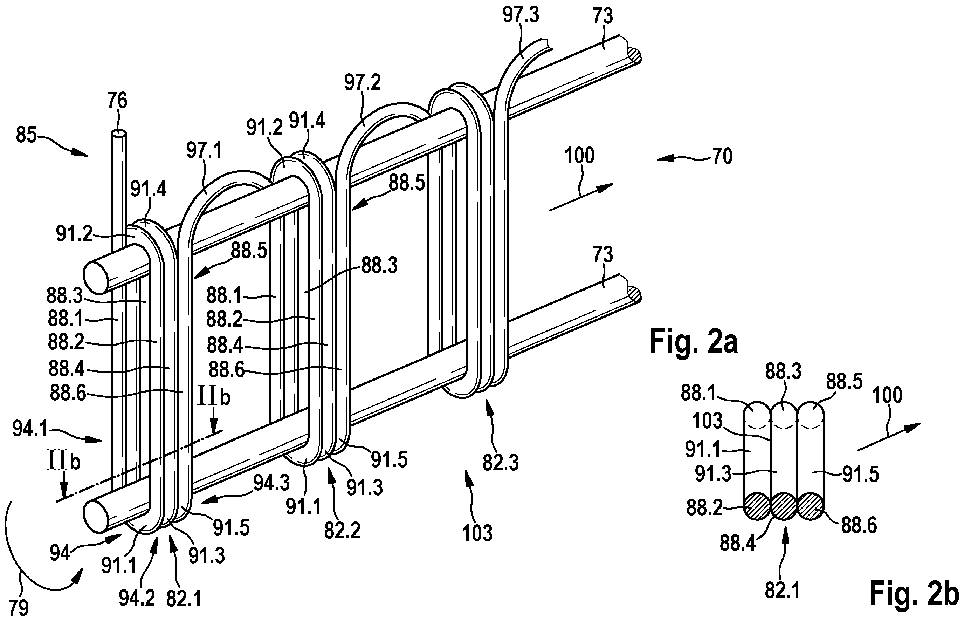

In Figur 2a ist eine erste Vorrichtung 70 zum Wickeln dargestellt. Diese Vorrichtung 70 weist im Beispiel zwei Stäbe 73 auf, die zueinander parallel angeordnet sind. Um diese beiden Stäbe wird ein Draht 76 gewickelt. Dieser Draht 76 hat beispielsweise einen Durchmesser von 2mm. Dieser Draht 76 wird wie in Figur 2 dargestellt linksdrehend, d. h. gegen den Uhrzeigersinn, wie durch den Pfeil 79 angedeutet, um die beiden Stäbe 73 herum gewickelt. Dabei wird eine erste Spule 82.1 gewickelt. Im Übrigen wird eine jede Spule im Allgemeinen mit der Bezugszahl 82 bezeichnet. Sofern es sich um eine spezielle Spule mit einer speziellen Position handelt, wird diese Bezugszahl 82 getrennt durch einen Punkt mit einer weiteren Ziffer bezeichnet, um die spezielle Spule zu bezeichnen. Dieser ersten Spule 82.1 folgt in der gleichen Drehrichtung eine zweite Spule 82.2, dieser wiederum eine dritte Spule 82.3. Die Spule 82.1 weist zunächst und außerhalb der beiden Stäbe 73 einen Anschluss 85 auf. Dieser Anschluss 85 dient später in der elektrischen Maschine zum Anschluss an einen Gleichrichter. Diesem Anschluss folgt in Wickelrichtung des Drahtes 76 zunächst eine erste Spulenseite, die hier mit der Bezugszahl 88.1 bezeichnet ist. Spulenseiten werden in dieser Beschreibung im Allgemeinen mit der Bezugszahl 88 bezeichnet. Sofern es sich um eine spezielle Spulenseite handelt, wird diese mit einer weiteren Zahl bezeichnet, die von der Bezugszahl 88 durch einen Punkt getrennt ist. Einer Spulenseite 88.1 folgt ein Spulenseitenverbinder 91.1, der hier ebenfalls im Allgemeinen mit der Bezugszahl 91 bezeichnet ist, jedoch im speziellen Fall wiederum durch einen Punkt getrennt mit einer weiteren ergänzenden Ziffer bezeichnet wird. Dem Spulenseitenverbinder 91.1 folgt eine zweite Spulenseite 88.2, der Spulenseite 88.2 folgt ein Spulenseitenverbinder 91.2, diesem wiederum eine weitere Spulenseite 88.3, die hier durch die Spulenseiten 88.1 und 88.2 teilweise verdeckt ist. Diese dritte Spulenseite 88.3 liegt neben der Spulenseite 88.1. Auf die Spulenseite 88.3 hin folgt der Spulenseitenverbinder 91.3, dem die Spulenseite 88.4 folgt. Der Spulenseite 88.4 schließt sich der Spulenseitenverbinder 91.4 an. Dem Spulenseitenverbinder 91.4 folgt eine weitere Spulenseite 88, hier speziell die Spulenseite 88.5, die jedoch vollständig durch die Spulenseiten 88.2 und 88.4 verdeckt ist. Der Spulenseite 88.5 folgt der Spulenseitenverbinder 91.5, der einstückig in die Spulenseite 88.6 übergeht. Diese erste Spule 82.1 hat gemäß dem hier beschriebenen Aufbau drei Windungen 94. Diese drei Windungen sind eine erste Windung 94.1, gefolgt von einer zweiten Windung 94.2 und einer dritten Windung 94.3, die jeweils spezielle Windungen sind.

Nach der dritten Windung 94.3 folgt einstückig ein Spulenverbinder 97, der als spezieller Spulenverbinder 97.1 die Spulen 82.1 und 82.2 miteinander einstückig verbindet. Der Aufbau der zweiten Spule 92.2 ist bis auf das Anfangsstück, welches hier der Spulenverbinder 97.1 ist, der gleiche. Dementsprechend folgt dem Spulenverbinder 97.1 eine Spulenseite 88.1, dieser ein Spulenseitenverbinder 91.1 usw., bis zur Spulenseite 88.6, wie bereits zuvor für die Spule 82.1 beschrieben. Nach der Spulenseite 88.5 geht die Spule 82.2 in den Spulenverbinder 97.2 über. Dem Spulenverbinder 97.2 folgt die dritte Spule 82.3 mit dem gleichen Aufbau wie die Spule 82.2, der hier jedoch nicht näher beschrieben ist, da er gleich dem zuvor beschriebenen Aufbau der Spule 82.2 ist.

Figur 2b zeigt einen Schnitt durch die erste Spule 82.1 mit den Wicklungsseiten 88.1 bis 88.6 und den drei Spulenseitenverbindern 91.1 bis 91.3. Wie zu erkennen ist, ist die Spule 82.1 in die Richtung 100 gewickelt, s. a. Figur 2a. Diese Richtung 100 ist im Wesentlichen senkrecht zu einer Windungsebene 103 bzw. senkrecht zu den Längsachen der Stäbe 73 angeordnet.

Es ist vorgesehen, die in Figur 2a beschriebene Anordnung von mehreren Spulen 82 derart auszuführen, dass insgesamt sechzehn Spulen 82, wie zu Figur 2a beschrieben, nacheinander in Reihe "geschaltet" über die Stäbe 73 gewickelt werden. Die Anzahl von insgesamt sechzehn Spulen 82 hängt damit zusammen, dass insgesamt angestrebt wird, eine elektrische Maschine mit 16-poligem Aufbau zu gestalten.

Die auf der ersten Vorrichtung 70 erzeugte Drahtanordnung ist eine Vorstufe 103 für eine Phasenwicklung, die häufig auch als Strangwicklung oder Strang bezeichnet wird.

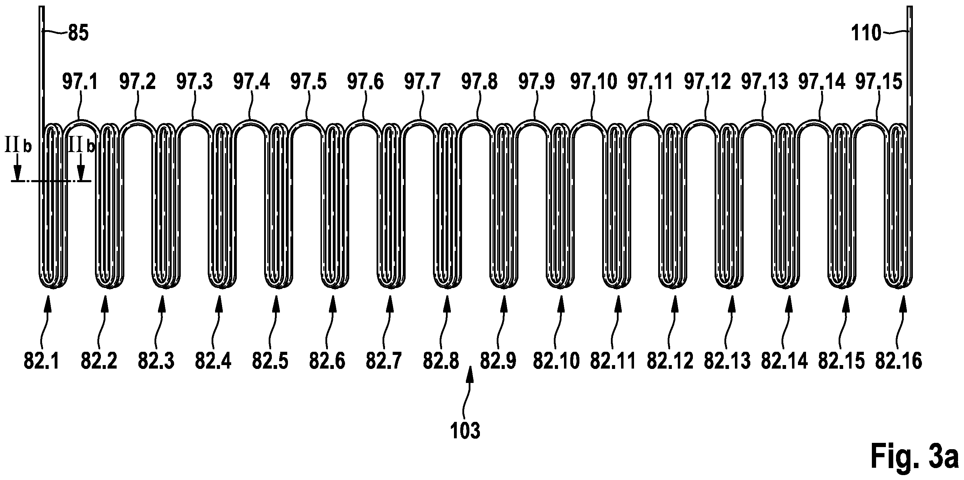

Zieht man die Vorstufe 103 von der ersten Vorrichtung zum Wickeln 70 herunter, so zeigt sich die in Figur 3a dargestellte vollständig erkennbare Vorstufe 103 für eine Phasenwicklung. Diese Vorstufe 103 zeigt den Anschluss 85, an dem die Wicklung begonnen wurde und einen Anschluss 110, an dem die Wicklung beendet wurde. Zwischen den beiden Anschlüssen 85 und 110 sind insgesamt sechzehn Spulen 82 angeordnet, die in Figur 3a mit den Bezugszahlen 82.1 bis 82.16 bezeichnet sind.

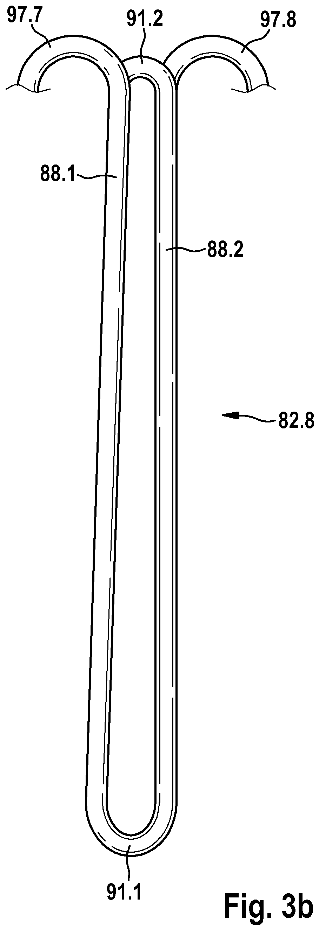

In Figur 3b ist eine Draufsicht auf die Spule 82.8 dargestellt. Dem Spulenverbinder 97.7 folgt die Spulenseite 88.1, der Spulenseitenverbinder 91.1, die Spulenseite 88.2, der Spulenseitenverbinder 91.2 usw. Wie in dieser Seitenansicht auch erkennbar ist, sind die Spulenseitenverbinder 91.1 und 91.2 mit unterschiedlichen Radien um die Stangen 73 gewickelt. Es ist demzufolge erkennbar, dass die Stange 73, die näher an den Spulenverbindern 97 angeordnet ist als die andere Stange 73, einen anderen, kleineren Radius aufweist als die von den Spulenverbindern 97 entferntere Stange 73. Demzufolge weist beispielsweise der Spulenseitenverbinder 91.2 einen kleineren Biegeradius als der Spulenseitenverbinder 91.1 auf.

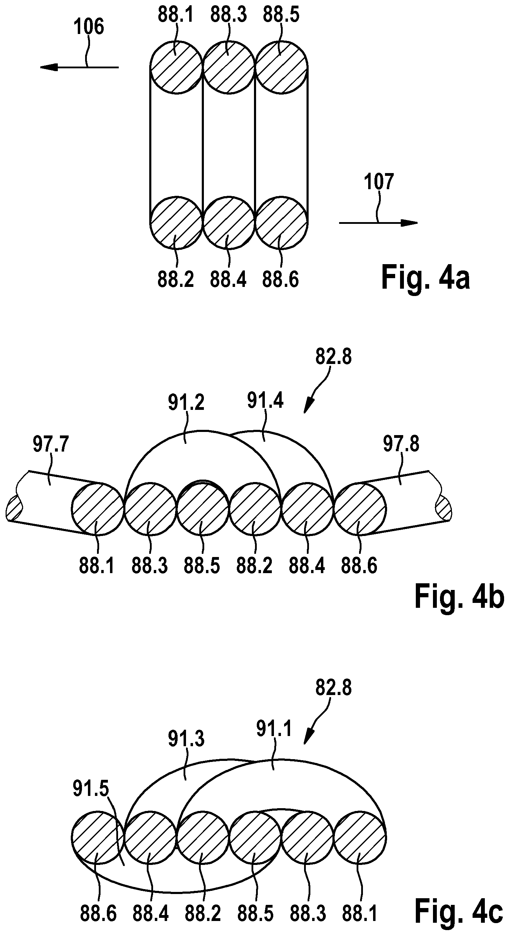

Mit Bezug zu Figur 2b, die einen Schnitt durch eine Spule 82 bzw. durch die Spule 82.1 zeigt, ist in Figur 4a und Figur 4b gezeigt, wie die Windungen 94 einer Spule 82 zueinander verschoben werden. Der in Figur 4a durch zwei Pfeile 106 bzw. 107 angedeuteten Relativverschiebung zwischen den Spulenseiten 88.2, 88.4 und 88.6 zu den Spulenseiten 88.1, 88.3 und 88.5 ist zudem eine weitere Bewegung überlagert, die dazu führt, dass die Spulenseiten 88.1, 88.3 und 88.5 in einer Ebene neben den Spulenseiten 88.2, 88.4 und 88.6 zu liegen kommen. Die Relativverschiebung gemäß den Pfeilen 106 und 107 entspricht der Richtung 100 gemäß Figur 2a. Die weitere überlagerte Bewegung ist senkrecht zu der Relativverschiebung gemäß den Pfeilen 106 und 107 sowie senkrecht zu der Drahtrichtung der Spulenseiten 88.

Des Weiteren sind die Spulenverbinder 97.7 und 97.8 eingezeichnet, siehe auch Figur 3a. Nach diesem Verschieben von Spulenseiten 88 liegen im Idealfall die Spulenseiten 88.1 bis 88.6 nebeneinander in einer Ebene. Gemäß dem in Figur 4b skizzierten Zustand überlagern beispielsweise der Spulenseitenverbinder 91.2 die Spulenseite 88.5 und der Spulenseitenverbinder 91.4 keine Spulenseite 88.

Während die Figur 4b die Situation der Spule 82.8 auf der Seite der Spulenverbinder 97.7 bzw. 97.8 zeigt, so zeigt die Figur 4c die Situation der Spule 82.8 auf der gegenüberliegenden Seite der Spule 82.8, auf der keine Spulenverbinder 97 angeordnet sind. Wie deutlich zu erkennen ist, überlagern dort die Spulenseitenverbinder 91.1 und 91.3 die Spulenseiten 88.3 und 88.5 bzw. die Spulenseiten 88.5 und 88.2. Das Ergebnis dieses Verschiebens ist, dass die in Spulenverbinder 97.7 und 97.8 übergehenden Spulenseiten 88.1 und 88.6 zuäußerst liegende Spulenseiten 88, hier 88.1 und 88.6, einer Spule 82, hier 82.8 sind.

Es ist somit ein Verfahren zur Herstellung einer Ständerwicklung 18 einer elektrischen Maschine 10, insbesondere eines Wechselstromgenerators, beschrieben, wobei die Ständerwicklung 18 zumindest eine Phasenwicklung, vorzugsweise drei, fünf, sechs oder sieben Phasenwicklungen, aufweist und die Phasenwicklung mehrere Spulen 82.1 bis 82.16 hat, wobei mehrer Spulen 82 in eine Richtung 100 gewickelt werden, die vorzugsweise senkrecht auf einer Windungsebene 103 steht, wobei eine bestimmte Anzahl an Windungen 94 gewickelt wird. Die Spule 82 hat mehrere Spulenseiten 88, wobei zwei Spulenseiten 88 der Spule 82 einstückig in Spulenverbinder 97 übergehen. Nachfolgend werden die Windungen 94 einer Spule 82 so zueinander verschoben, dass die in Spulenverbinder 97 übergehenden Spulenseiten 88 zuäußerst liegende Spulenseiten 88 einer Spule 82 sind.

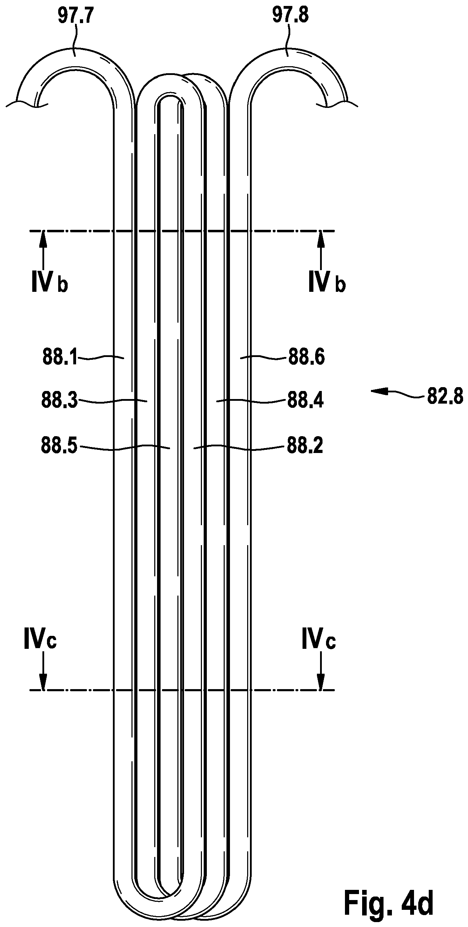

In Figur 4d ist eine Draufsicht auf die verschobene Spule 82.8 dargestellt. In Verbindung mit den Schnitten nach Figur 4b und Figur 4c ist die Lage und Anordnung einer derartigen Spule 82.8 nach dem Verschieben gut erkennbar.

In einem optionalen Arbeitsschritt ist vorgesehen, die gemäß Figur 4d nebeneinander liegenden Spulenseiten 88.1 bis 88.6 senkrecht zu der Ebene, in der diese Spulenseiten 88.1 bis 88.6 gemäß Figur 4d angeordnet sind, zu prägen. Dieser Prägeschritt führt dazu, dass ein Nutfüllfaktor in einer Nut deutlich erhöht werden kann.

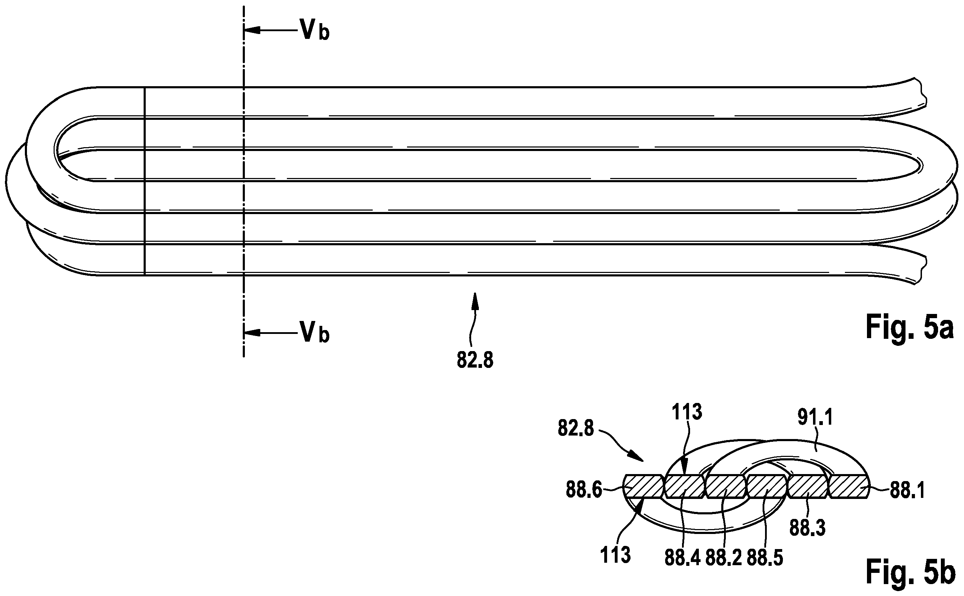

Demzufolge ist optional vorgesehen, dass nach dem Verschieben der Windungen 94 einer Spule 82 so zueinander, dass die in Spulenverbinder 97 übergehenden Spulenseiten 88.1, 88.6 zuäußerst liegende Spulenseiten 88.1, 88.6 einer Spule 82 sind. Es ist dabei vorgesehen, dass zumindest eine der Spulenseiten 88.1 bis 88.6, vorzugsweise jedoch alle Spulenseiten 88.1 bis 88.6 der Spule 82 geprägt werden, siehe auch Figur 5a und 5b.

Die in Figur 5b dargestellten Spulenseiten 88 sind parallelflankig geprägt. Neben einer derartigen parallelflankigen Prägung ist es auch möglich, beispielsweise einen insgesamt im Wesentlichen trapezförmigen Querschnitt der Spulenseiten 88.1 bis 88.6 zu prägen. Dies ist davon abhängig, ob die Spulenseiten 88.1 bis 88.6 in eine rechteckförmige Nut eingebracht werden sollen, wie es für das in Figur 5b dargestellte Beispiel der Fall ist, oder ob die Spulenseiten in eine eher trapezförmige Nut eingebracht werden sollen, bei der die Nutflanken beispielsweise genau nach radial innen (siehe Figur 1) orientiert sind.

Eine jede der in Figur 5b dargestellten Spulenseiten 88.1 bis 88.6 weist einander gegenüberliegende Anprägungen 113 auf. Der Übersichtlichkeit halber sind nur einige wenige der Anprägungen 113 entsprechend beschriftet.

Abweichend von dem bisher Beschriebenen ergäbe sich folgende Situation mit zwei bzw. vier Windungen einer Spule 82:
- Würden die Spulen 82 beispielsweise mit nur zwei Windungen 94 gewickelt, so existierten die Spulenseiten 88.5 und 88.6 nicht. Der Spulenseitenverbinder 91.2 würde folglich in der Projektion keine Spulenseite 88.5 überlagern. Ein Spulenseitenverbinder 91.1 überlagerte in der Projektion (analog zu Figur 4c) lediglich die Spulenseite 88.3. Auf die Spulenseite 88.4 folgte der nächste Spulenverbinder 97.
- Würden die Spulen 82 beispielsweise mit vier Windungen 94 gewickelt, so wiesen die Spulen 82 zusätzlich die Spulenseiten 88.7 und 88.8 auf. Dies würde dazu führen, dass auf der Seite der Spulenverbinder 97 nicht nur zwei Spulenseitenverbinder 91.2 und 91.4, sondern ein weiterer Spulenseitenverbinder 91.6 vorhanden wäre, der ebenfalls in der Projektion eine Spulenseite 88 überlagerte. Des Weiteren würden auf der entgegengesetzten Seite die Spulenseitenverbinder 91.1 und 91.3 sowie ein Spulenseitenverbinder 91.5 jeweils drei Spulenseiten 88 überlagern.

Der Spulenseitenverbinder 91.4 kann auch in der Ebene der Spulenseiten 88 (Figur 4b) liegen. Das Gleiche gelte für einen Spulenseitenverbinder 91.6 für den Fall von vier Windungen 94 je Spule 82. Im Falle von nur zwei Windungen 94 je Spule 82 könnte der Spulenseitenverbinder 91.2 auch lediglich in der Ebene der Spulenseiten 88 angeordnet sein.

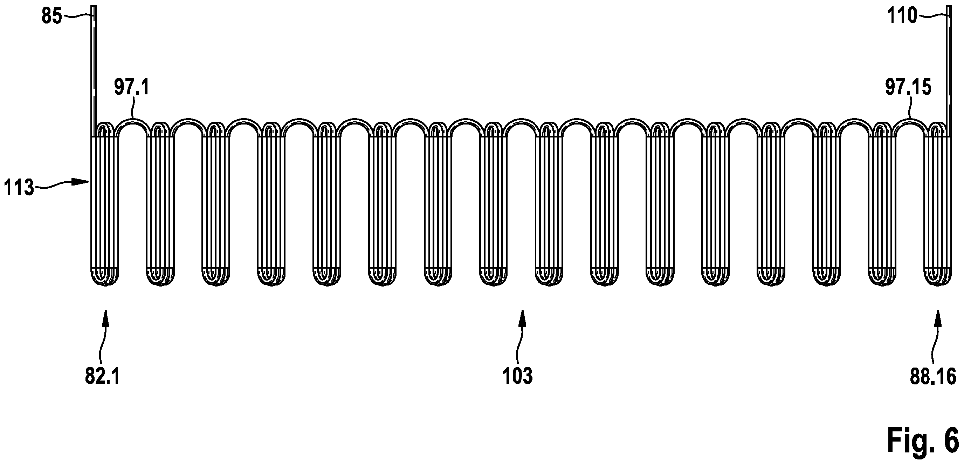

In Figur 6 ist die Vorstufe 103 für eine Phasenwicklung dargestellt, nachdem die Spulenseiten 88 - wie in Figur 5b gezeigt und dazu beschrieben - geprägt wurden.

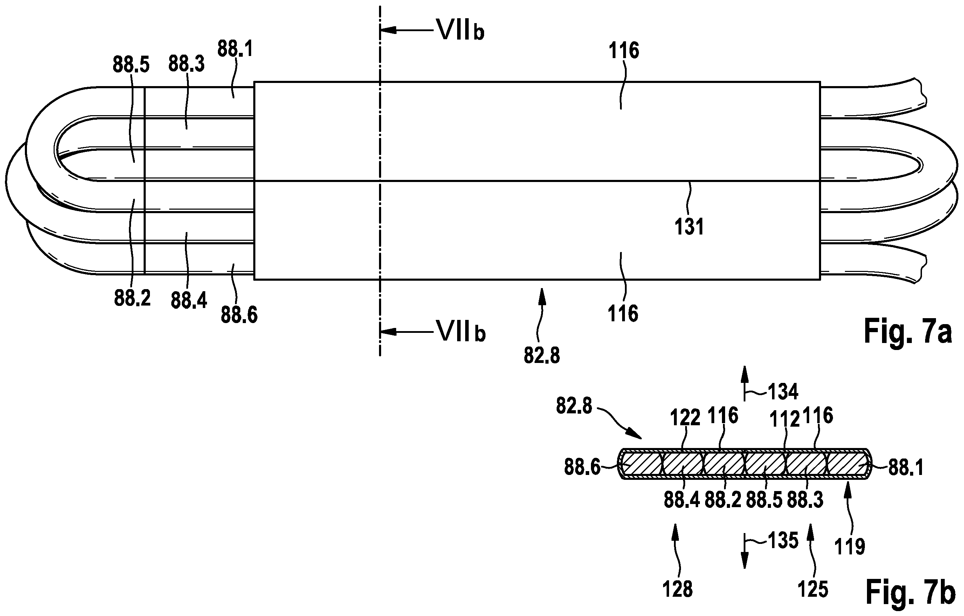

In Figur 7a ist eine einzelne nach dem Verprägen dargestellte Spule 82.8 dargestellt. Der Unterschied zur Spule 82.8 nach Figur 5a besteht darin, dass die Spulenseiten 88.1 bis 88.6 durch ein Verbindungsmittel 116 miteinander fest verbunden wurden. Dieses Verbindungsmittel 116 ist ein flächiger Isolationsstoff, beispielsweise ein Isolationspapier bzw. Isolationsfaserstoff. Dieses Isolationspapier bzw. dieser Isolationsstoff weist auf einer zu den Spulenseiten 88.1 bis 88.6 zugewandten Seite einen Klebstoff auf, durch den die Spulenseiten 88.1 bis 88.6 mit dem Isolationsstoff fest verbunden sind. Dieser Isolationsstoff bzw. dieses Verbindungsmittel 116 verbindet die Spulenseiten 88.1 bis 88.6 derart, dass zwei Gruppen gebildet sind, die aus jeweils drei Spulenseiten bestehen. In Figur 7b ist ein Querschnitt durch die Spule 82.8 dargestellt. So zeigt diese Figur die drei Spulenseiten 88.1, 88.3 und 88.5, die einander benachbart sind und durch einen U-förmig um diese drei in einer Reihe angeordneten Spulenseiten 88.1, 88.3 und 88.5 umgelegten Isolationsstoff als Verbindungsmittel 116 miteinander verbunden sind. Der Isolationsstoff weist eine Schicht 119 auf, die durch einen Klebstoff 122 gebildet ist. Die durch die Spulenseiten 88.1, 88.3 und 88.5 gebildete Gruppe 125 wird durch das Verbindungsmittel 116 fest miteinander verbunden. Gleichfalls gilt das für die Gruppe 128, die aus den Spulenseiten 88.2, 88.4 und 88.6 besteht, bzw. diese aufweist. Es sind somit die Spulenseiten 88 der zwei Gruppen 125 und 128 durch ein Verbindungsmittel 116 miteinander fest verbunden.

Das Umkleben von jeweils drei Spulenseiten 88 mittels des Isolationsstoffs kann dabei auf beispielsweise zwei verschiedene Arten und Weisen geschehen: in der ersten Ausführung ist beispielsweise möglich, dass drei einander benachbarte Spulenseiten 88 mittels eines Isolationsstoffs bzw. Isolationspapiers U-förmig umklebt werden. Gleiches kann für die anderen drei Spulenseiten 88 vorgenommen werden, so dass im Idealfall zwei U-förmige Isolationsstoffe - wie in Figur 7b dargestellt - mit ihren Schenkeln einander gegenüber stehen. In einer Alternative können beispielsweise auch alles sechs Spulenseiten 88.1 bis 88.6 mittels eines einstückigen Isolationsstoffs bzw. Isolationspapiers umklebt werden. In einem weiteren Schritt würde man dann zwischen den beiden innersten Spulenseiten 88.2 und 88.5 beidseitig den Isolationsstoff entlang einer Fuge 131 zwischen den beiden innersten Spulenseiten 88.2 und 88.5 beidseitig durchschneiden und so eine Verbindung zwischen den beiden Gruppen 125 und 128 trennen.

In einem nächsten Schritt, der gegebenenfalls auch ohne Weiteres ohne das eben erwähnte Verbinden der einzelnen Spulenseiten vorgenommen werden kann, werden die beiden Gruppen 125 und 128 räumlich voneinander getrennt. Dieser Vorgang ist in Figur 7b durch die beiden Pfeile 134 und 135 angedeutet, die einander in entgegengesetzte Richtungen zeigen und zeigen, in welche Richtungen in einem nächsten Schritt die Gruppen 125 und 128 bewegt werden sollen.

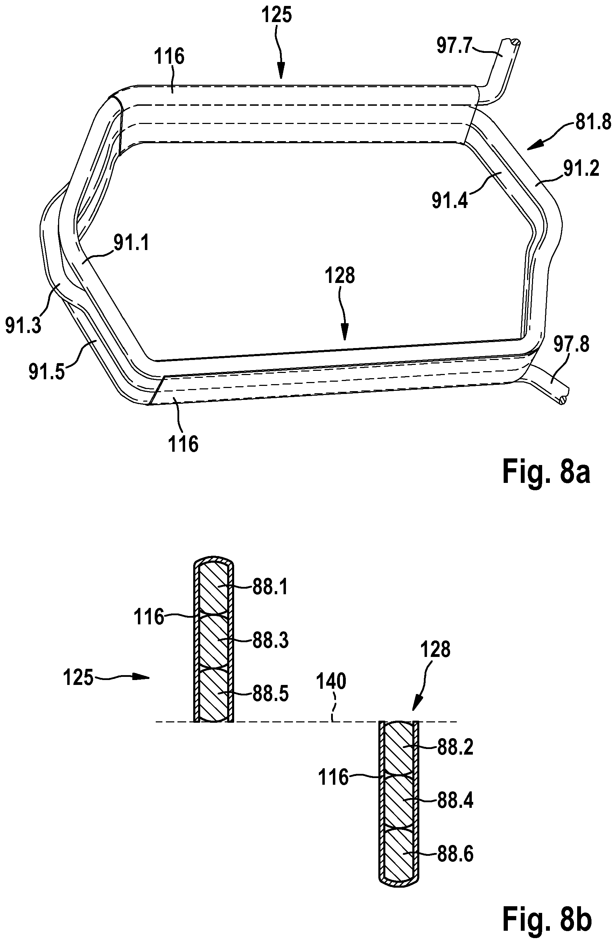

In Figur 8a und Figur 8b ist die auseinander geschobene Spule 82.8 dargestellt. Figur 8a zeigt eine räumliche Darstellung der Spule 82.8, Figur 8b zeigt einen Schnitt durch die Spulenseiten 88.1 bis 88.6 der auseinander geschobenen Spule 82.8. Deutlich zu erkennen sind die beiden auseinander geschobenen Gruppen 125 und 128. Die Spulenseitenverbinder 91.1 bis 91.5 im Allgemeinen bilden später im Endzustand der Phasenwicklung insgesamt den Wicklungsüberhang 45. In Figur 8b ist zudem eine Ebene 140 einbeschrieben, die im Grunde genommen durch die ehemals zueinander gerichteten Oberflächen der Spulenseiten 88.5 und 88.2 definiert ist. Beide Spulenseiten 88.5 und 88.2 sind geradlinig ausgeführt und zueinander parallel (Idealfall).

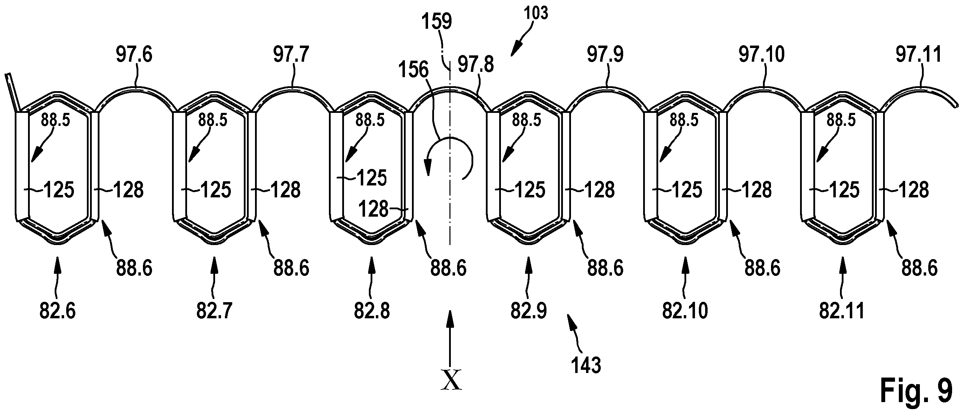

In Figur 9 ist ausschnittweise ein Teil der Vorstufe 103 dargestellt, nach dem die Gruppen 125 und 128 einer jeden Spule 82 auseinander geschoben wurden. In Figur 9 weist eine jede Spule 82.6 bis 82.11 und im Übrigen jede weitere Spule 82 der Vorstufe 103 eine Ebene 140 auf, wie sie gemäß Figur 8b skizziert ist.

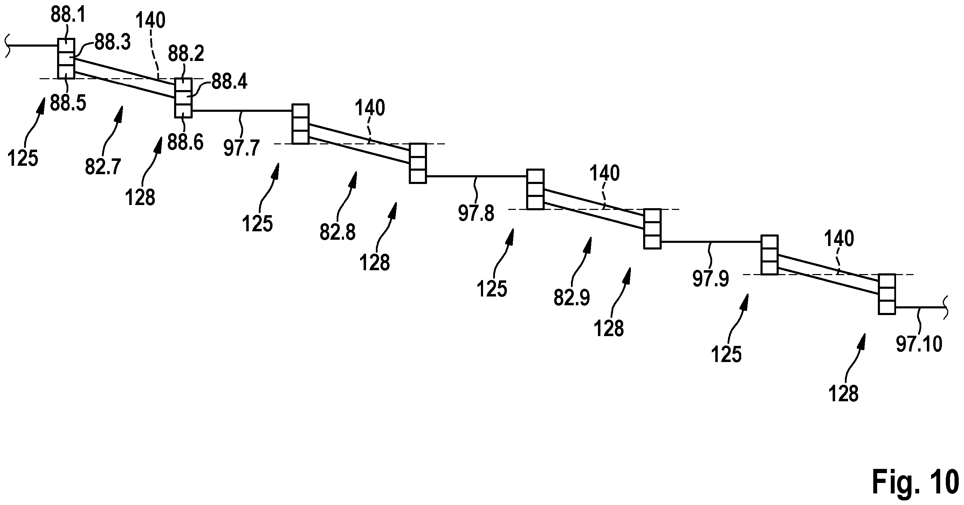

Figur 10 zeigt einen schematischen Schnitt durch die Vorstufe 103 aus Figur 9. Dort sind die eingezeichneten Ebenen 140 gut erkennbar.

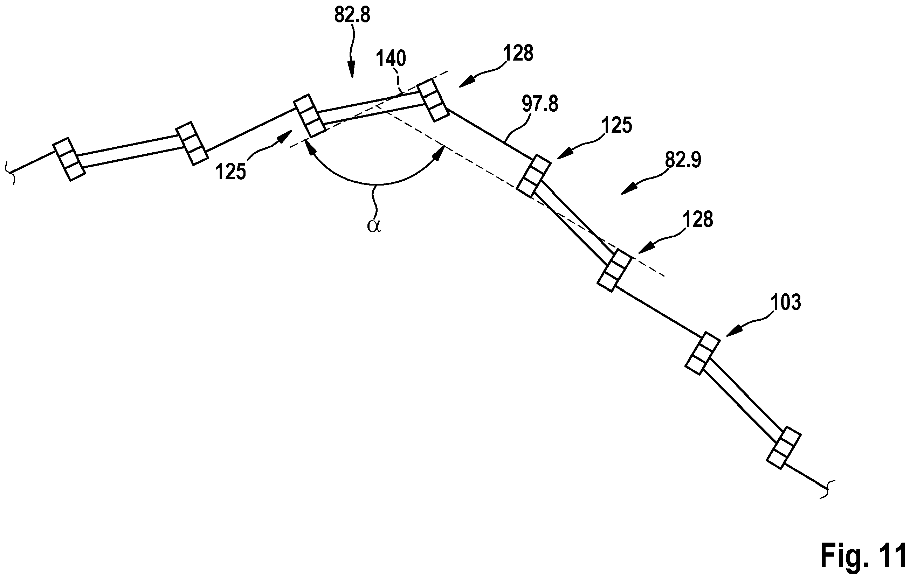

In einem weiteren Schritt ist vorgesehen, dass eine jede Vorstufe 103 umgeformt wird. Dabei soll folgende Bedingung gelten: eine jede Phasenwicklung bzw. deren Vorstufe 103 hat jeweils zumindest zwei in Reihe geschaltete Spulen, hier beispielsweise 82.8 und 82.9, die in diesem Fall durch den Spulenverbinder 97.8 in Reihe geschaltet sind. Eine jede Spule 82.8 bzw. 82.9 hat eine Ebene 140 zwischen den beiden Gruppen 125 und 128. Gemäß dem vorgesehenen Verfahrensschritt ist vorgesehen, die zumindest zwei Spulen 82.8 und 82.9 so zueinander anzuordnen, dass deren jeweilige Ebenen 140 in einem Winkel α zueinander angeordnet werden, der kleiner als 180 Winkelgrade ist, Figur 11.

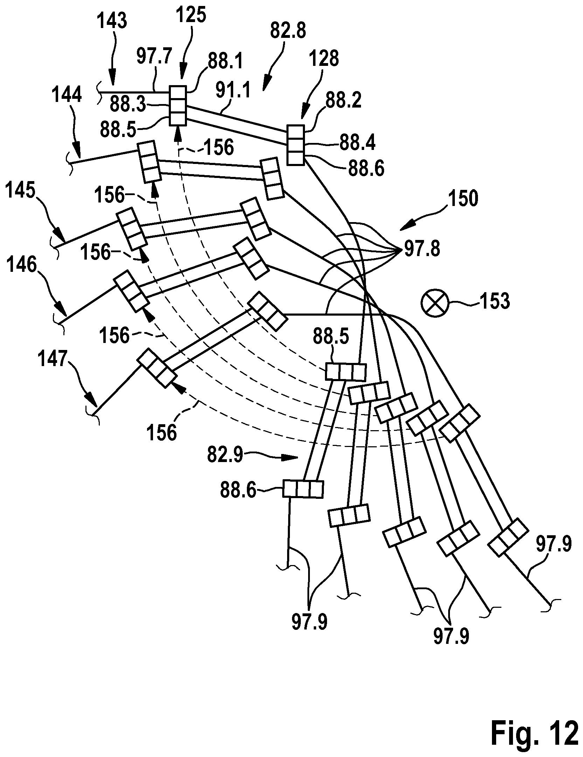

In Figur 12 sind insgesamt fünf verschiedene Vorstufen 103 schematisch dargestellt. Eine jede dieser Vorstufen 103 steht für eine spätere Phasenwicklung bzw. einen späteren Phasenstrang. Dies bedeutet letztlich, dass diese fünf Phasenstränge Teil einer Ständerwicklung 18 sein werden, die fünfsträngig bzw. fünfphasig ist. An dieser Stelle sei vermerkt, dass der bisher beschriebene Wicklungsaufbau grundsätzlich auch für dreiphasige oder auch zweimal dreiphasige Ständerwicklungen 18 verwendbar ist. In Figur 12 ist dargestellt, wie die einzelnen Vorstufen 103 der Phasenwicklungen 143, 144, 145, 146 und 147 an einer Aufsetzstelle 150 in Drahtrichtung 153 der Spulenseiten 88.1 bis 88.6 nacheinander und übereinander gesetzt werden. Demzufolge wird zunächst die Vorstufe 103 bzw. die Phasenwicklung 143 angeordnet, dann die nächste Phasenwicklung 144 mit ihrem Spulenverbinder 97.8 auf den Spulenverbinder 97.8 der Phasenwicklung 143 gesetzt. Es folgen dann die weiteren Phasen 145 bis 147 mit den jeweiligen Spulenverbindern 97.8. Des Weiteren ist der Figur 12 zu entnehmen, dass im Anschluss darin verschiedene Spulen 82 aufeinander gefügt werden. Im Beispiel weisen die einzelnen Phasenwicklungen 143 bis 147 jeweils 16 Spulen 82, d. h. die Spulen 82.1 bis 82.16 auf. In der Mitte der Phasenwicklungen 143 bis 147, d. h. beim Spulenverbinder 97.8 werden die Phasenwicklungen 143 bis 147 bzw. die beiden rechts und links vom mittleren Spulenverbinder 97.8 angeordneten Hälften der Phasenwicklungen 143 bis 147 zueinander winklig angeordnet. Die jeweils beiderseits des Spulenverbinders 97.8 angeordneten Hälften der Phasenwicklungen 143 bis 147 werden nun wie durch die Pfeile 156 angedeutet aufeinander geklappt. Wie in Figur 12 dargestellt, werden somit die Spulenseiten 88.5 der zum Spulenverbinder 97.8 einerseits nächstgelegener Spule 82.8 auf die Spulenseite 88.5 der anderen nächstgelegenen Spule 82.9 gesetzt. Gleiches gilt für die anderen Phasenwicklungen 144 bis 147.

Die mehreren Phasenwicklungen (143, 144, 145, 146, 147) weisen von der Aufsetzstelle (150) ausgehend in zwei Richtungen jeweils mindestens eine Spule (82) auf, wobei in eine erste Richtung und in eine zweite Richtung jeweils mindestens eine erste Spule (82.8, 82.9) angeordnet ist und dass derart verfahren wird, dass die erste Gruppe (125) einer in eine Richtung ersten Spule (88.9) auf eine erste Gruppe (125) einer in die andere Richtung ersten Spule (88.8) aufeinander geklappt wird.

Mit Bezug zur Figur 9, in der eine Mitte 159 der Phasenwicklung 143 dargestellt ist, wird beim Aufeinanderklappen gemäß Figur 12 folgendes erreicht: die Spulenseite 88.5 der Spule 82.9 wird auf die Spulenseite 88.5 der Spule 82.8 gelegt, die Spulenseite 88.5 der Spule 82.10 wird auf die Spulenseiten 88.5 der Spule 82.7 gelegt, die Spulenseite 88.5 der Spule 82.11 wird auf die Spulenseite 88.5 der Spule 82.6 gelegt und so weiter und so fort, bis schließlich und hier nicht dargestellt, die Spulenseite 88.5 der Spule 82.16 auf die Spulenseite 88.5 der Spule 82.1 gesetzt bzw. angeklappt wird.

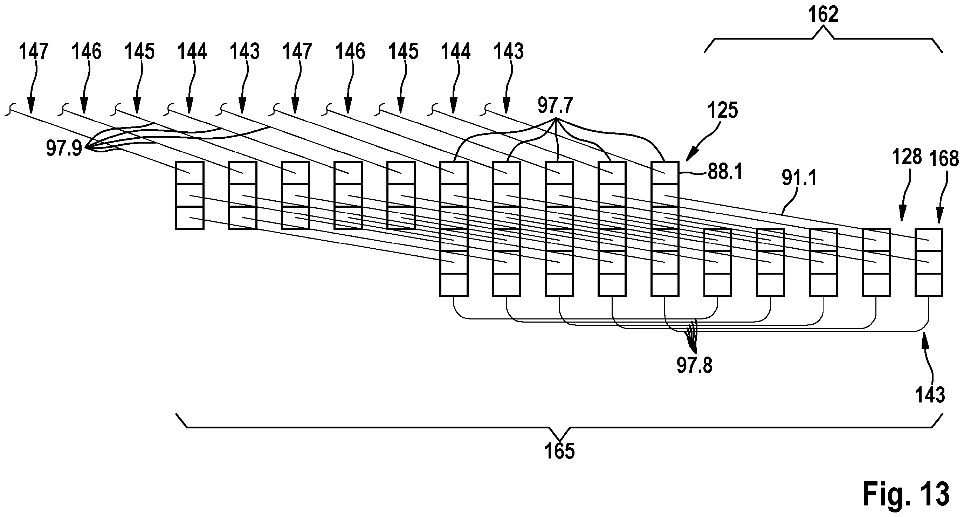

In Figur 13 ist der Zustand dargestellt, wie er nach dem Aufeinanderklappen der benachbarten Spulen 82.8 der einzelnen Phasen 143 bis 147 auf die Spulen 82.9 der Phasenwicklungen 143 bis 147 vorliegt. Zur Vereinfachung und Übersichtlichkeit der Darstellung wurden für die Spulenseiten in der Ansicht Rechtecke als symbolischer Querschnitt verwendet.

Beim Aufeinanderklappen ergibt sich dabei ein sogenannter Wicklungsüberhang 162, auf den später noch die Sprache kommen wird. Für den Fall, dass die Ständerwicklung 18 beispielsweise nur drei Phasenwicklungen aufweisen würde, wäre der Wicklungsübergang 162 nicht wie dargestellt durch fünf Gruppen 128 gegeben, sondern durch lediglich drei Gruppen 128.

Klappt man die Phasenwicklungen 143 bis 147 wie zu Figur 12 und Figur 13 dargestellt und erläutert bei einer Polpaarzahl von sechzehn aufeinander, so entstehen dabei sogenannte als Untergruppen 165 bezeichnete Wicklungsbereiche. Diese Untergruppen 165 bestehen gemäß dem hier beschriebenen Verfahren bei insgesamt fünf Phasenwicklungen 143 bis 147 aus zehn Spulen 82. Die in Figur 13 dargestellte Untergruppe 165 besteht dabei aus den Spulen 82.8 der Phasenwicklungen 143 bis 147 und den Spulen 82.9, dementsprechend aus insgesamt zehn Spulen 82. Es ergeben sich durch das beschriebene Aufeinanderklappen der Hälften der Phasenwicklungen 143 bis 147 somit insgesamt acht Untergruppen 165, die jeweils zehn Spulen 82 umfassen. Ausgehend von einem Ende 168 folgen dementsprechend zunächst fünf Spulen 82.8, die die eine Hälfte einer Untergruppe 165 ausmachen, die gefolgt werden von fünf Spulen 82.9, die die zweite Hälfte der Untergruppe 165 ausmachen. Die zweite Untergruppe 165 wird aus den fünf Spulen 82.7 und den fünf Spulen 82.10 gebildet. Dieses Schema fährt fort, bis zur achten Untergruppe 165, bei der die eine Hälfte der Untergruppe durch die Spulen 82.1 (fünf mal) und die andere Hälfte von fünf Spulen durch die Spulen 82.16 gebildet sind.

In abstrakterer Form kann dabei das Aufeinanderklappen der Hälften mehrerer Phasenwicklungen 143 bis 147 so formuliert werden, dass die mehreren Phasenwicklungen 143 bis 147 von der Aufsetzstelle 150 ausgehend in zwei Richtungen jeweils n Spulen aufweisen. Dies bedeutet für den hier beschriebenen Fall, dass einerseits nach rechts und andererseits nach links, siehe auch Figur 9, jeweils n = acht Spulen 82 angeordnet sind. Ausgehend von der Mitte 159 einer Phasenwicklung 143 bis 147 bedeutet dies, dass in eine erste Richtung (nach links) und in eine zweite Richtung (nach rechts) jeweils eine erste Spule 82.8 bzw. 82.9 angeordnet ist. Es wird dabei derart verfahren, dass die erste Gruppe 125 einer in eine Richtung ersten Spule 88.9 auf eine erste Gruppe 125 einer in die andere Richtung ersten Spule 88.8 aufeinander geklappt wird. Dieser Vorgang wird gleichfalls auch bei den zweitnächstliegenden Spulen 82.7 bzw. 82.10 aufgehend von der Mitte 159 einer Phasenwicklung 143 bis 147 durchgeführt. Gleiches gilt für die drittnächsten Spulen 82.6 bzw. 82.11, und so weiter und so fort.

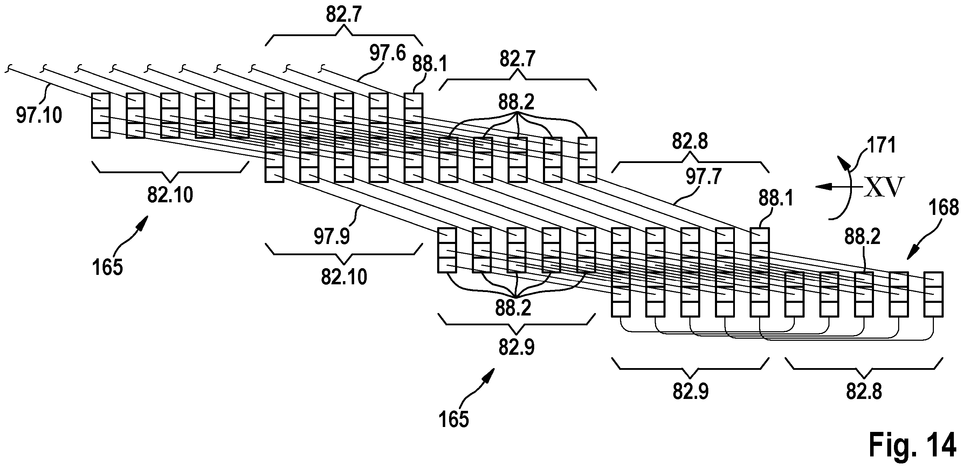

Wie in Figur 14 dargestellt, entstehen durch das Aufeinanderklappen der Hälften der Phasenwicklungen 143 bis 147 Untergruppen 165, die untereinander durch Spulenverbinder 97.7 und 97.9 bzw. 97.6 und 97.10 bzw. 97.5 und 97.11 bzw. 97.4 und 97.12 bzw. 97.3 und 97.13 bzw. 97.2 und 97.14 bzw. 97.1 und 97.15 verbunden sind.

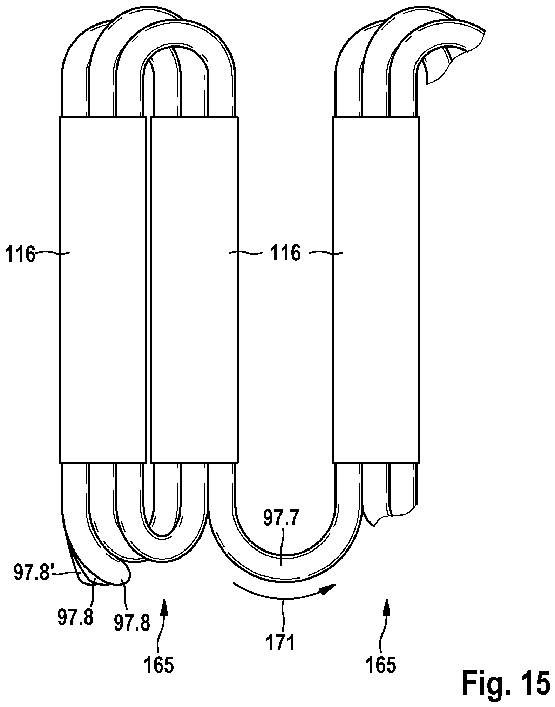

In Figur 15 ist eine Seitenansicht der ersten Untergruppe 165 und zum Teil auch der zweiten Untergruppe 165 dargestellt.

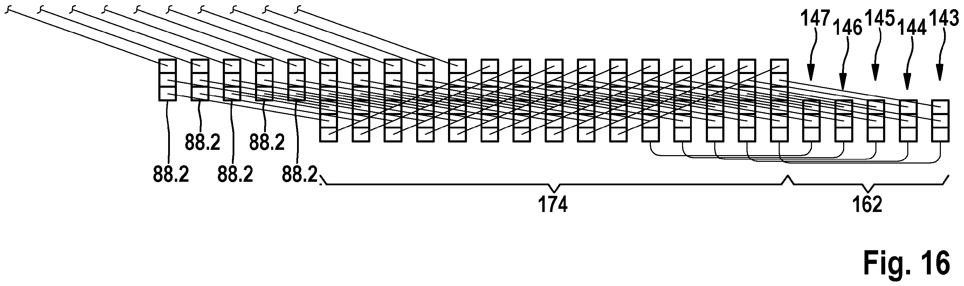

In einem weiteren Schritt ist vorgesehen, dass die Untergruppen 165 relativ zueinander gedreht werden. Diese Drehung ist in Figur 15 durch einen entsprechenden Pfeil 171 dargestellt. Mit Bezug zu Figur 14 bedeutet dies, dass die in Figur 1 ganz rechts dargestellte Untergruppe 165, wie dort ebenfalls mit dem Pfeil 171 dargestellt, "umgeschlagen" wird, d. h. dass die Spulenseiten 88.2 der einen Untergruppe 165 an die Spulenseiten 88.2 der anderen, nächstgelegenen Untergruppe 165 angelegt werden. Es entsteht dabei dann eine Konstellation, wie sie in Figur 16 dargestellt ist. Der mit der Bezugszahl 174 bezeichnete Abschnitt der Ständerwicklung 18 hat zumindest auf der Seite, die den Wicklungsüberhang 162 bildet, den Endzustand der Ständerwicklung 18 vor dem Einlegen in das Ständereisen erreicht. Der Vorgang des "Umschlagens" kann auch dadurch beschrieben werden, dass je zwei benachbarte Untergruppen 165 derart durch Biegung zueinander bewegt werden, dass linke Spulenseiten 88 einer Untergruppe 165 auf linke Spulenseiten 88 einer unmittelbar benachbarten Untergruppe 165 geklappt werden.

Die beiden Gruppen 125 und 128 haben jeweils die gleich große Anzahl an Spulenseiten 88. Gemäß dem hier dargestellten Ausführungsbeispiel ist die Anzahl der Spulenseiten 88 einer jeden Gruppe 125 bzw. 128 jeweils drei. Je nach Auslegung der Wicklung kann die Anzahl der Spulenseiten 88 auch beispielsweise zwei oder vier oder fünf, jedenfalls ein ganzzahliges Vielfaches sein.

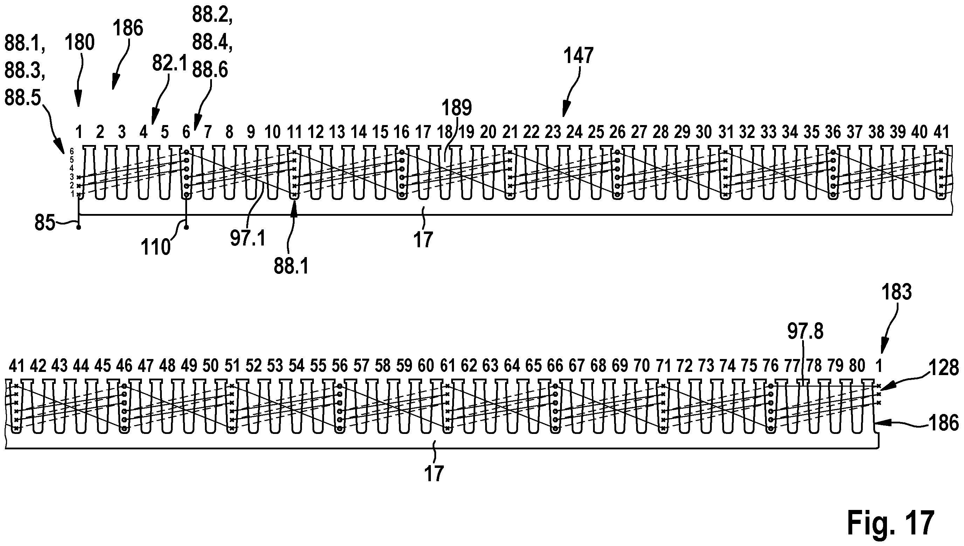

In Figur 17 ist beispielhaft die Phasenwicklung 147 dargestellt. Diese Positionierung ergibt sich dadurch, dass in einen im Wesentlichen quaderförmigen Ständerkern, bzw. ein Ständereisen 17, die fertig hergestellte Ständerwicklung 18, d. h. nachdem auch die letzte Untergruppe 165 umgeschlagen wurde, in ein quaderförmiges Ständereisen 17 eingesetzt wird. Das Ständereisen 17 besteht aus mehreren bzw. einer Vielzahl an Lamellen, die paketiert sind. Ein derartiger Aufbau ist prinzipiell aus der WO-2001 054 254 A1 bekannt. Bei dem hier vorliegenden Ständereisen 17 nach Figur 17 besteht der Unterschied zum dort beschriebenen Stand der Technik darin, dass das Ständereisen 17 am Anfang 180 und auch am Ende 183 eine jeweils halbe Nut 186 aufweist. Zwischen den beiden halben Nuten 186 sind insgesamt 79 Nuten 189 angeordnet. Prinzipiell ist auch ein Ständereisen wie es in der genannten Offenlegungsschrift verwendet wird, d. h. mit in Bezug auf dieses Ausführungsbeispiel 80 ganzen Nuten 189 verwendbar. In der Nut 1 bzw. dieser halben Nut 186 befindet sich der Anschluss 85, der im Wesentlichen axial aus der halben Nut 186 herausgeführt ist. In der Nut 189 mit der Nut-Nr. 6 befindet sich der Anschluss 110. Die Spule 82.1 ist mit ihren Spulenseiten 88.1, 88.3 und 88.5 in der Nut 189 mit der Nur-Nr. 1, d. h. der halben Nut 186 an der Nutposition 1, angeordnet, während die Spulenseiten 88.2, 88.4 und 88.6 in der Nut 189 mit der Nut-Nr. 6 positioniert sind. Links neben der halben Nut 186 an der Nutposition 1 sind insgesamt sechs Ziffern angegeben, die in aufsteigender Folge die Nutlage bezeichnen. So ist in der Nutlage 1 der halben Nut 186 die Spulenseite 88.1 angeordnet, darüber die Spulenseite 88.3 und wiederum darüber die Spulenseite 88.5. Dementsprechend befinden sich in der Nut 189 mit der Nut-Nr. 6 in der Nutlage 4 die Spulenseite 88.2, in der Nutlage 5 die Spulenseite 88.4 und in der Nutlage 6 die Spulenseite 88.6. Von der Nut 189 mit der Nut Nr. 6 geht der erste Spulenverbinder 97.1 aus, um in der Nutlage 1 der Nut 189 mit der Nut-Nr. 11 wieder mit einer Spulenseite 88.1 fortzufahren. Die Wicklung fährt in diesem Sinne bis einschließlich Gruppe 128 nach der Nut 189 mit der Nut-Nr. 80 fort, um dann mittels eines Spulenverbinders 97.8, siehe auch Figur 13, bis in die Nut 189 mit der Nr. 6 zurückzukehren.

Analog zu dieser Phasenwicklung 147 sind die anderen vier Phasenwicklungen 143 bis 146 aufgebaut. Die Phasenwicklung 146 läge dementsprechend mit ihrem Anschluss 85 in der Nut 2, alle weiteren Wicklungsabschnitte sind in Bezug zur Phasenwicklung 147 lediglich um eine Nut nach rechts versetzt, so dass die am weitesten links angeordnete Gruppe 128 nicht mehr an der Nutposition 1 wäre, sondern an der Nutposition 2. Die Gestaltung der weiteren Phasenwicklungen 145 bis 143 ist dementsprechend.

Nach dem Einliegen der Ständerwicklung 18 in das Ständereisen 17 ist vorgesehen, dass das Ständereisen 17 mit der Ständerwicklung 18 in eine Ringform mit nach radial innen orientierten Nuten 189 umgeformt wird.

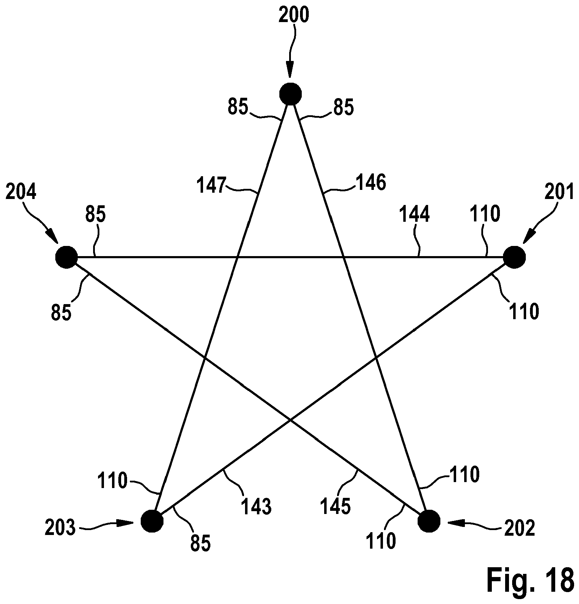

Es ist vorgesehen, die im Beispiel fünf Phasenwicklungen 143 bis 147, wie in Figur 18 dargestellt, zu verschalten. Die Verschaltungspunkte 200, 201, 202, 203 und 204 sind in bekannter Weise an eine Brückengleichrichterschaltung angeschlossen.

Ergänzend ist nachfolgend eine Variante des Herstellungsverfahrens für eine Ständerwicklung 18 beschrieben. Die Variation betrifft die Anzahl der Windungen 94 der einzelnen Spulen 82. Wärend in den zuvor gegebenen Ausführungen die Anzahl der Windungen 94 konstant ist und drei je Spule beträgt, was im Ergebnis zu sechs Leitern je Nut 189 führt, ist es mit dem hier prinzipiell beschriebenen Verfahren auch möglich, eine ungerade Anzahl von Leitern je Nut 189 zu erreichen.

Hierzu wird zwar wie in Figur 2a dargestellt eine Spule 82 nach der anderen gewickelt; allerdings hat diese Spulenkette bei insgesamt sechzehn aufeinander folgenden Spulen 82 zunächst acht Spulen 82.1 bis 82.8, die jeweils drei Windungen 94 haben. Die darauf folgenden acht Spulen 82.9 bis 82.16 haben beispielsweise jeweils zwei Windungen 94. Die darauffolgenden Schritte werden bzgl. der zunächst acht Spulen 82.1 bis 82.8 genauso ausgeführt wie es die Figuren bis einschließlich zur Figur 9 zeigen. Bzgl. der darauf folgenden acht Spulen 82.9 bis 82.16 wird jedoch analog verfahren. So liegen nach dem Prägen der Spulenseiten 88 bspw. bei der Spule 82.9 die Spulenseiten 88 in Bezug zu Fig. 5b von rechts nach links betrachtet wie folgt nebeneinander: Auf die Spulenseite 88.1 folgt die Spulenseite 88.3, auf diese Spulenseite 88.3 folgt die Spulenseite 88.2 und schließlich folgt die Spulenseite 88.4. Die Schritte wie zu den Figuren bis einschließlich Fig. 9 sind ohne Weiteres analog durchführbar.

Mit Bezug zu Figur 10 änderte sich an der Darstellung für die hier beschriebene Variante lediglich, dass die rechten Spulen 82 ab einschließlich Spule 82.9 eben nur zwei Windungen 94.1 und 94.2, zwischen die ebenfalls eine Ebene 140 einzutragen wäre.

Mit Bezug zu Figur 11 würde in einem weiteren Schritt vorgesehen sein, dass eine jede Vorstufe 103 umgeformt wird. Dabei soll folgende Bedingung gelten: eine jede Phasenwicklung bzw. deren Vorstufe 103 hat jeweils zumindest zwei in Reihe geschaltete Spulen, hier beispielsweise 82.8 und 82.9, die in diesem Fall durch den Spulenverbinder 97.8 in Reihe geschaltet sind. Eine jede Spule 82.8 bzw. 82.9 hat eine Ebene 140 zwischen den beiden Gruppen 125 und 128. Gemäß dem vorgesehenen Verfahrensschritt ist vorgesehen, die zumindest zwei Spulen 82.8 (drei Windungen 94) und 82.9 (zwei Windungen 94) so zueinander anzuordnen, dass deren jeweilige Ebenen 140 in einem Winkel *α* zueinander angeordnet werden, der kleiner als 180 Winkelgrade ist (analog Figur 11).

Analog zu Figur 12 würden genauso auch die Vorstufen 103 nach diesem Ausführungsbeispiel ineinander gesetzt und analog auch aufeinandergeklappt werden.

Mit Bezug zu Figur 13 sähe eine Untergruppe 165 dann wie folgt aus: von den Spulenverbindern 97.8 ausgehend würde sich rechts ein Wicklungsüberhang 162 mit fünf Gruppen 128 ergeben, wobei dieser Wicklungsüberhang 162 ebenfalls Gruppen 128 mit drei Drahtabschnitten hätte. Die Gruppen 128 links des Wicklungsüberhangs 162 bestünden dagegen aus jeweils zwei übereinanderliegenden Drahtabschnitten. Die Gruppen 125 direkt darüber hätten wiederum drei übereinanderliegende Drahtabschnitte. Die fünf Gruppen 125 links daneben hätten wiederum nur zwei übereinanderliegende Drahtabschnitte. Durch Umklappen der sich ebenso ergebenden Untergruppen 165 ergäbe sich analog zu Figur 16 der bereits beschriebene Wicklungsüberhang 162 (drei Leiterabschnitte übereinander), an den sich nach links der mit der Bezugszahl 174 bezeichnete Abschnitt der Ständerwicklung 18 anschlösse, der mit fünf Leiterabschnitte übereinander den Endzustand der Ständerwicklung 18 aufwiese. Ein linker, sich ergebender und hier nicht dargestellter Wicklungsüberhang wiese eine Höhe von zwei Leiternabschnitten auf.

## Patentansprüche

1. Verfahren zur Herstellung einer Vorstufe (103) einer Phasenwicklung (143, 144, 145, 146, 147) einer Ständerwicklung (18) einer elektrischen Maschine (10), insbesondere eines Wechselstromgenerators, wobei die Ständerwicklung (18) zumindest die eine Phasenwicklung (143, 144, 145, 146, 147) aufweist und die Phasenwicklung (143, 144, 145, 146, 147) mehrere Spulen (82) durchgängig aus einem Drahtstück hat, wobei mehrere Spulen (82) in eine Richtung (100) gewickelt werden, wobei eine bestimmte Anzahl an Windungen (94) gewickelt wird und eine Spule (82) mehrere Spulenseiten (88) hat, wobei zwei Spulenseiten (88) der Spule (82) einstückig in Spulenverbinder (97) übergehen und nachfolgend die Windungen (94) einer Spule (82) so zueinander verschoben werden, dass die Spulenseiten (88.1, 88.2, 88.3, 88.4, 88.5, 88.6) in einer Ebene zu liegen kommen, wobei in Spulenverbinder (97) übergehende Spulenseiten (88) zuäußerst liegende Spulenseiten (88) einer Spule (82) sind.

2. Verfahren nach Anspruch 1, **dadurch gekennzeichnet, dass** die Spulenseiten (88) in eine erste und eine zweite Gruppe (125, 128) geteilt und die beiden Gruppen (125, 128) auseinandergeschoben werden.

3. Verfahren nach Anspruch 2, **dadurch gekennzeichnet, dass** die zumindest eine Vorstufe (103) einer Phasenwicklung (143, 144, 145, 146, 147) zumindest zwei zueinander in Reihe geschaltete Spulen (82) hat, die jeweils durch einen Spulenverbinder (97) verbunden sind, wobei eine jede Spule (82) eine Ebene (140) zwischen den beiden Gruppen (125, 128) hat, und in einem weiteren Verfahrensschritt die zumindest zwei Spulen (82) so zueinander angeordnet werden, dass die Ebenen (140) der zumindest zwei oder mittleren Spulen (82; 82.2, 82.5) in einem Winkel (α) zueinander angeordnet werden, der kleiner als 180 Winkelgrade ist.

4. Verfahren nach Anspruch 3, **dadurch gekennzeichnet, dass** mehrere Vorstufen (103) von Phasenwicklungen (143, 144, 145, 146, 147) im Bereich des Spulenverbinders (97) und damit an einer Aufsetzstelle (150) in Drahtrichtung (153) der Spulenseiten (88) nacheinander und übereinander gesetzt werden.

5. Verfahren nach Anspruch 4, **dadurch gekennzeichnet, dass** die mehreren Vorstufen (103) von Phasenwicklungen (143, 144, 145, 146, 147) von der Aufsetzstelle (150) ausgehend in zwei Richtungen jeweils mindestens eine Spule (82) aufweisen, wobei in eine erste Richtung und in eine zweite Richtung jeweils mindestens eine erste Spule (82.8, 82.9) angeordnet ist und dass derart verfahren wird, dass die erste Gruppe (125) einer in eine Richtung ersten Spule (88.9) auf eine erste Gruppe (125) einer in die andere Richtung ersten Spule (88.8) aufeinander geklappt wird.

6. Verfahren nach Anspruch 5, **dadurch gekennzeichnet, dass** durch das Aufeinanderklappen Untergruppen (165) entstehen, die untereinander durch Spulenverbinder (97) verbunden sind.

7. Verfahren nach Anspruch 6, **dadurch gekennzeichnet, dass** je zwei benachbarte Untergruppen (165) derart durch Biegung zueinander bewegt werden, dass linke Spulenseiten (88) einer Untergruppe (165) auf linke Spulenseiten (88) einer unmittelbar benachbarten Untergruppe (165) geklappt werden.

8. Verfahren nach Anspruch 2, **dadurch gekennzeichnet, dass** die zwei Gruppen (125, 128) eine jeweils gleich große Anzahl an Spulenseiten (88) haben.

9. Verfahren nach einem der vorstehenden Ansprüche, **dadurch gekennzeichnet, dass** die Spulenseiten (88) der zwei Gruppen (125, 128) durch ein Verbindungsmittel (116) miteinander fest verbunden werden.

10. Verfahren nach Anspruch 9, **dadurch gekennzeichnet, dass** das Verbindungsmittel (116) ein Klebstoff (122) ist, der vorzugsweise eine Schicht (140) auf einem flächigen Isolationsstoff ist.

11. Verfahren nach einem der vorstehenden Ansprüche, **dadurch gekennzeichnet, dass** nach dem Verschieben der Windungen (94) einer Spule (82) so zueinander, dass die Spulenseiten (88.1, 88.2, 88.3, 88.4, 88.5, 88.6) in einer Ebene zu liegen kommen und in Spulenverbinder (97) übergehenden Spulenseiten (88) zuäußerst liegende Spulenseiten (88) einer Spule (82) sind zumindest eine der Spulenseiten (88), vorzugsweise alle der Spulenseiten (88) der Spule (82), geprägt werden.

## Claims

1. Method for producing a precursor (103) of a phase winding (143, 144, 145, 146, 147) of a stator winding (18) of an electric machine (10), in particular an alternator, wherein the stator winding (18) has at least the one phase winding (143, 144, 145, 146, 147) and the phase winding (143, 144, 145, 146, 147) has a plurality of coils (82) made continuously from one piece of wire, wherein a plurality of coils (82) are wound in one direction (100), wherein a specific number of turns (94) is wound and a coil (82) has a plurality of coil sides (88), wherein two coil sides (88) of the coil (82) transition integrally into coil connectors (97) and the turns (94) of one coil (82) are subsequently shifted with respect to one another in such a way that the coil sides (88.1, 88.2, 88.3, 88.4, 88.5, 88.6) come to lie in one plane, wherein coil sides (88) transitioning into coil connectors (97) are outermost coil sides (88) of a coil (82).

2. Method according to Claim 1, **characterized in that** the coil sides (88) are divided into a first and a second group (125, 128) and the two groups (125, 128) are pushed apart from one another.

3. Method according to Claim 2, **characterized in that** the at least one precursor (103) of a phase winding (143, 144, 145, 146, 147) has at least two coils (82) which are connected in series with one another and which are each connected by a coil connector (97), wherein each coil (82) has a plane (140) between the two groups (125, 128), and, in a further method step, the at least two coils (82) are arranged with respect to one another in such a way that the planes (140) of the at least two or central coils (82; 82.2, 82.5) are arranged at an angle (α) with respect to one another, which is less than 180 angular degrees.

4. Method according to Claim 3, **characterized in that** a plurality of precursors (103) of phase windings (143, 144, 145, 146, 147) is positioned one after the other and one above the other in the region of the coil connector (97) and therefore at a placement point (150) in the wire direction (153) of the coil sides (88).

5. Method according to Claim 4, **characterized in that** the plurality of precursors (103) of phase windings (143, 144, 145, 146, 147) has in each case at least one coil (82) in two directions, starting from the placement point (150), wherein in each case at least one first coil (82.8, 82.9) is arranged in a first direction and in a second direction, and **in that** the procedure is such that the first group (125) of a coil (88.9) which is first in one direction is folded onto a first group (125) of a coil (88.8) which is first in the other direction.

6. Method according to Claim 5, **characterized in that**, by virtue of the folding of the groups one on top of the other, subgroups (165) are produced, which are connected to one another by coil connectors (97).

7. Method according to Claim 6, **characterized in that** in each case two adjacent subgroups (165) are moved with respect to one another by bending in such a way that left-hand coil sides (88) of a subgroup (165) are folded onto left-hand coil sides (88) of a directly adjacent subgroup (165).

8. Method according to Claim 2, **characterized in that** the two groups (125, 128) each have an equal number of coil sides (88).

9. Method according to one of the preceding claims, **characterized in that** the coil sides (88) of the two groups (125, 128) are fixedly connected to one another by a connecting means (116).

10. Method according to Claim 9, **characterized in that** the connecting means (116) is an adhesive (122), which is preferably a layer (140) on a flat insulating material.

11. Method according to one of the preceding claims, **characterized in that**, once the turns (94) of a coil (82) have been shifted with respect to one another in such a way that the coil sides (88.1, 88.2, 88.3, 88.4, 88.5, 88.6) come to lie in one plane and coil sides (88) transitioning into coil connectors (97) are outermost coil sides (88) of a coil (82), at least one of the coil sides (88), preferably all of the coil sides (88) of the coil (82), are embossed.

## Revendications

1. Procédé de réalisation d'un premier étage (103) d'un enroulement de phase (143, 144, 145, 146, 147) d'un enroulement de stator (18) d'une machine électrique (10), notamment d'un alternateur, dans lequel l'enroulement de stator (18) comporte au moins ledit enroulement de phase (143, 144, 145, 146, 147) et l'enroulement de phase (143, 144, 145, 146, 147) est pourvu de plusieurs bobines (82) toutes constituées d'un tronçon de fil, dans lequel plusieurs bobines (82) sont enroulées dans une direction (100), dans lequel un nombre déterminé de spires (94) est enroulé et une bobine (82) est pourvue de plusieurs faces de bobine (88), dans lequel deux faces de bobine (88) de la bobine (82) se transforment d'un seul tenant en connecteur de bobine (97) et les spires (94) d'une bobine (82) se décalent ensuite les unes par rapport aux autres de manière à ce que les faces de bobine (88.1, 88.2, 88.3, 88.4, 88.5, 88.6) viennent à se situer dans un plan, dans lequel des faces de bobine (88) se transformant en connecteur de bobine (97) sont les faces de bobine (88) se situant le plus à l'extérieur d'une bobine (82).

2. Procédé selon la revendication 1, **caractérisé en ce que** les faces de bobine (88) sont divisées en des premier et deuxième groupes (125, 128) et **en ce que** les deux groupes (125, 128) sont séparés l'un de l'autre.

3. Procédé selon la revendication 2, **caractérisé en ce que** l'au moins un premier étage (103) d'un enroulement de phase (143, 144, 145, 146, 147) est pourvu d'au moins deux bobines (82) connectées l'une à l'autre en série, qui sont respectivement reliées par un connecteur de bobine (97), dans lequel chaque bobine (82) possède un plan (140) entre les deux groupes (125, 128) et, lors d'une autre étape de procédé, les au moins deux bobines (82) sont disposées les unes par rapport aux autres de manière à ce que les plans (140) des au moins deux bobines ou des bobines médianes (82 ; 82.2, 82.5) soient disposés en formant l'un par rapport à l'autre un angle (α) qui est inférieur à 180 degrés d'angle.

4. Procédé selon la revendication 3, **caractérisé en ce que** plusieurs premiers étages (103) d'enroulements de phase (143, 144, 145, 146, 147) sont placés les uns à la suite des autres et les uns sur les autres dans la région du connecteur de bobine (97) et par conséquent à un emplacement de montage (150) dans la direction du fil (153) des faces de bobine (88).

5. Procédé selon la revendication 4, **caractérisé en ce que** les multiples premiers étages (103) d'enroulements de phase (143, 144, 145, 146, 147) comportent respectivement au moins une bobine (82) partant du point de montage (150) dans deux directions, dans lequel au moins une première bobine (82.8, 82.9) est respectivement disposée dans une première direction et dans une deuxièmes direction, et **en ce qu'**il est fait en sorte que le premier groupe (125) d'une première bobine (88.9) orientée dans une direction soit refermé sur un premier groupe (125) d'une première bobine (88.8) orientée dans l'autre direction.

6. Procédé selon la revendication 5, **caractérisé en ce que** la fermeture a pour effet qu'il se forme des sous-groupes (165) qui sont reliés entre eux par le connecteur de bobine (97).

7. Procédé selon la revendication 6, **caractérisé en ce que** deux sous-groupes (165) adjacents sont déplacés par courbure l'un par rapport à l'autre de manière à ce que des faces de bobine gauches (88) d'un sous-groupe (165) se referment sur des faces de bobine gauches (88) d'un sous-groupe (165) directement adjacent.

8. Procédé selon la revendication 2, **caractérisé en ce que** les deux groupes (125, 128) présentent respectivement un même nombre élevé de faces de bobine (88) .

9. Procédé selon l'une quelconque des revendications précédentes, **caractérisé en ce que** les faces de bobine (88) des deux groupes (125, 128) sont solidement reliées les unes aux autres par un agent de liaison (116).

10. Procédé selon la revendication 9, **caractérisé en ce que** l'agent de liaison (116) est un adhésif (122) qui est de préférence une couche (140) déposée sur un matériau isolant plan.

11. Procédé selon l'une quelconque des revendications précédentes, **caractérisé en ce qu'**au moins l'une des faces de bobine (88), de préférence toutes les faces de bobine (88) de la bobine (82), sont gravées après le déplacement des spires (94) d'une bobine (82) les unes par rapport aux autres de manière à ce que les faces de bobine (88.1, 88.2, 88.3, 88.4, 88.5, 88.6) viennent à se situer dans un plan et à ce que des faces de bobine (88) se transformant en connecteur de bobine (97) soient des faces de bobine (88) se situant le plus à l'extérieur d'une bobine (82) .
